# EUROPEAN PATENT APPLICATION

(11) **EP 2 131 112 A1**
(43) Date of publication of application: **09.12.2009**
(21) Application number: 08251932.3
(22) Date of filing: 04.06.2008
(51) Int. Cl.: F24F 5/00, F28D 20/02

(54) **Building cooling apparatus using PCM for loading the reservoir during night-time**

(71) Applicant: Monodraught Limited, Buckinghamshire HP12 3SE (GB)
(72) Inventor: Hopper, Nicholas John, High Wycomba, Buckinghamshire, HP12 3SE (GB); Butters, Martin, High Wycomba, Buckinghamshire, HP12 3SE (GB); Hooley, Anne, High Wycomba, Buckinghamshire, HP12 3SE (GB); Etheridge, David, Nottingham, NG7 2RD (GB)
(74) Representative: Sales, Robert Reginald

(57) **Abstract**

Building cooling apparatus 10, the apparatus including an inlet 22 for air from outside of the building 12, an inlet 32 for air from inside the building, selectively operable closure means 34, 36 for each of the inlets, an outlet 28 for directing air into the building from the apparatus, a pathway 24 leading from the inlets to the outlet, and a heat exchange arrangement 38 extending into the pathway. The heat exchange arrangement 38 includes a phase change material which can cause cooling of air passing through the pathway 24 by virtue of melting of the phase change material, and warming of air passing through the pathway 24 by virtue of solidification of the phase change material.

## Description

This invention concerns a building cooling apparatus and a method of cooling the interior of a building.

The use of air-conditioning systems to provide cooling to building interiors is becoming increasingly commonplace, especially in view of increasing global temperatures. Whilst air-conditioning systems provide effective cooling, they consume large amounts of energy and are thus economically and environmentally unattractive.

Natural cooling systems, which provide night time cooling to the interiors of buildings, are known. These systems rely on the fact that outside air is generally much cooler during the night time than during the day time, and supply cool night air, for example using the passive stack effect, from a building exterior to a building interior during the night time to reduce the temperature inside the building. However, if the temperature inside the building increases to an unacceptable level during the day time when cool night air is not available, such natural cooling systems may be less effective and alternative cooling systems, such as conventional air-conditioning systems, may be required.

According to the present invention there is provided building cooling apparatus, the apparatus including an inlet for air from outside of the building, an inlet for air from inside the building, selectively operable closure means for each of the inlets, an outlet for directing air into the building from the apparatus, a pathway leading from the inlets to the outlet, and a heat exchange arrangement extending into the pathway, which arrangement includes a phase change material which can cause cooling of air passing through the pathway by virtue of melting of the phase change material, and warming of air passing through the pathway by virtue of solidification of the phase change material.

The inlet closure means may be adjustable so as to permit selective partial closing of each of the inlets.

A fan may be provided for urging air along the pathway, which fan may be a variable speed fan.

The heat exchange arrangement may include a reservoir for phase change material and one or more conduit leading in a loop from the reservoir and extending through the pathway. The or each conduit may include a pipe, and fins may be provided on the outside of the pipe to aid heat exchange.

A selectively operable pump may be provided for pumping the phase change material through the or each conduit. The reservoir may be thermally insulated.

The phase change material may be in the form of a slurry, with a phase change component which may be provided in discrete capsules, in a carrier liquid. The capsules may be made of plastics material and may be acrylic. The phase change component may have a phase change temperature of between 20 and 28°C, and more particularly between 22 and 26°C.

The phase change component may be a wax or may be freeze dried alcohol. The carrier liquid may be water.

An external temperature sensor may be provided, and the sensor may be located in the inlet for air from outside of the building. An internal temperature sensor may be provided locatable in the building.

A phase change material temperature sensor may be provided.

An internal room temperature sensor and/or a carbon dioxide level sensor may be provided locatable in the building.

A control unit may be provided which is operably connected to the inlet closure means. The control unit may be operably connected to any of the fan, pump for phase change material, internal and external sensors, the phase change material temperature sensor and/or the carbon dioxide level sensor.

The control unit may automatically control the apparatus in response to detected conditions.

The control unit may include a timer, and the control unit may be arranged to control the apparatus differently at respective times of day, and especially at night time relative to daytime.

The control unit may be configured to provide different operating conditions dependent on the time of year and/or external weather conditions.

The control unit may be configured to provide operating conditions dependent on occupancy of the building, which occupancy may be automatically detected, or may be inputted into the control unit.

The invention also provides a method of cooling a building, the method including in daytime conditions selectively passing air over a cool phase change material to cool the air, the air being drawn from internally and/or externally of the building, and in night time conditions passing air from externally of the building over the phase change material to cool same.

In daytime conditions the proportion of air drawn from internally and externally of the building may depend on the internal temperature, and at greater internal temperatures a greater proportion of air may be drawn from inside the building.

The amount of air passing over the phase change material may be dictated by the internal temperature, with a greater amount of air passing over the phase change material at higher temperatures.

The method may use an apparatus as defined above.

An embodiment of the present invention will now be described by way of example only and with reference to the accompanying drawings, in which:-
Fig. 1 is a diagrammatic cross sectional view of a building cooling apparatus according to the invention operating in daytime conditions;
Fig. 2 is a similar view to Fig. 1 but with the apparatus operating in night time conditions; and

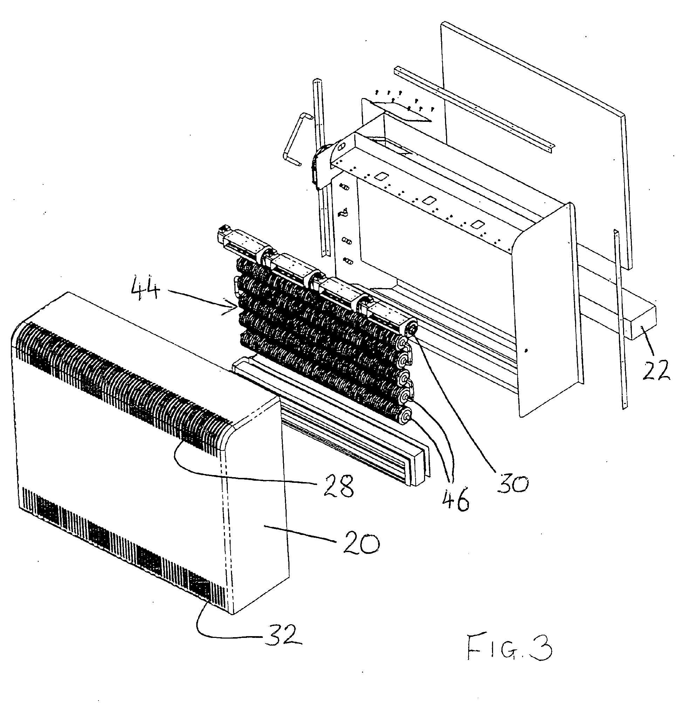

Fig. 3 is a diagrammatic perspective exploded view of the apparatus of Figs. 1 and 2.

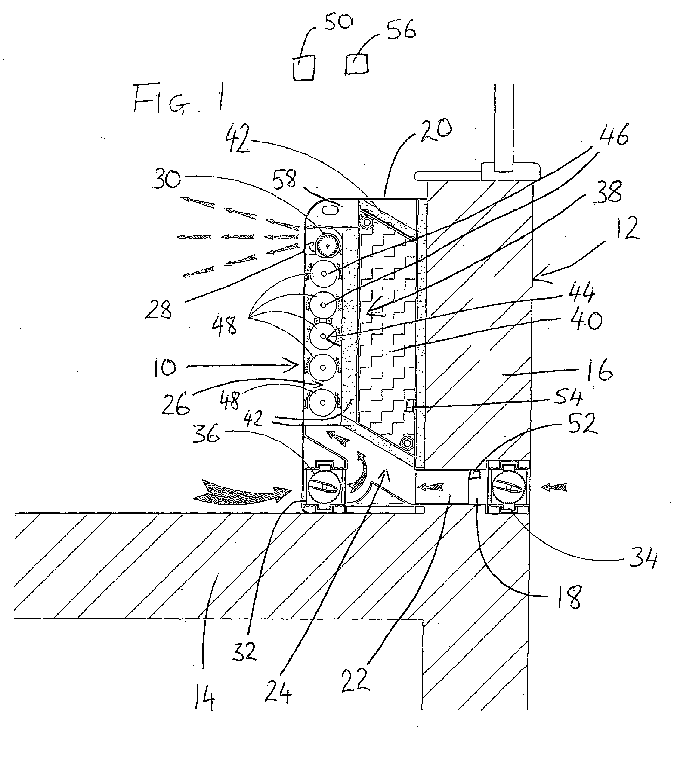

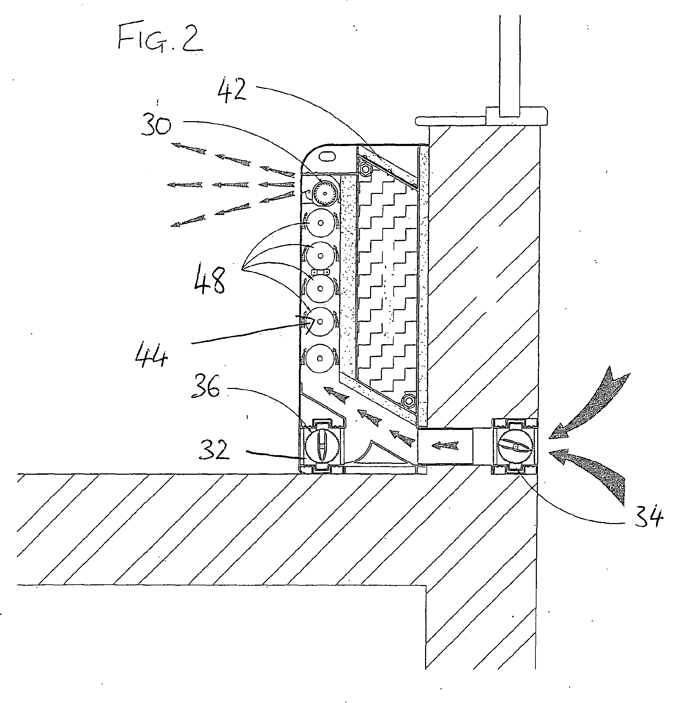

The drawings show a building cooling apparatus 10 mounted in Figs. 1 and 2 in a building 12. The apparatus 10 is mounted on a floor 14 against an external wall 16 through which an opening 18 is provided just above the level of the floor 14.

The apparatus 10 includes an outer casing 20. An inlet 22 is provided at the rear lower end of the casing 20, and the external inlet 22 connects with the opening 18. A passageway 24 extends forward and upwardly from the external inlet 22 to an upwardly extending heat exchange section 26. At the top of the section 26 a forward facing outlet 28 is provided, and a variable speed tangential fan 30 is provided adjacent the outlet 28 to pull air through the passageway 24 thereto.

An internal inlet 32 is provided at the front of the casing 20 immediately above the floor 14. The inlet 32 connects to the passageway 24 just below the heat exchange section 26.

Adjustable closures 34 and 36 are provided at the entrance to the external and internal inlets 22, 32. The closures 34, 36 are selectively adjustable between fully open and fully closed conditions by electrical actuators (not shown).

A heat exchange arrangement 38 is provided which includes a reservoir 40 for phase change material located within the casing 20 behind the heat exchange section 26 of the passageway 24. The reservoir 40 is surrounded by thermal insulation 42. A heat exchanger 44 is provided in the heat exchange section 26 and comprises five interconnected horizontally extending rods 46 which extend in a loop from the reservoir 40. The rods 46 are provided with a plurality of fins 48 to aid heat exchange. A pump (not shown) is provided for pumping phase change material from the reservoir 40 around the heat exchanger 44 and back into the reservoir 40.

An internal temperature sensor 50 located in the building 12 is provided. An external temperature sensor 52 is located in the external inlet 22. A phase change material temperature sensor 54 is provided within the reservoir 40. A carbon dioxide level detector 56 is also provided in the building 12. A control unit 58 is provided in the casing 20 towards the top and front thereof, and the control unit 58 is operably connected to the sensors 50, 52, 54 and carbon dixiode level detector 56. The control unit 58 is also operably connected to the fan 40, closures 34, 36 and the phase change material pump.

In use, the reservoir 40 and heat exchanger 44 will be filled with a phase change material. The phase change material may be in the form of a slurry such as an encapsulated wax or encapsulated freeze dried alcohol located in a plurality of acrylic micro capsules. The capsules are carried in a carrier liquid such as water to provide a slurry which can be pumped around the heat exchanger 44 irrespective of the state of the phase change component. The wax/freeze dried alcohol has a phase change temperature of around 24°C.

Fig. 1 shows the apparatus 10 in a daytime operation. Here relatively warm air is drawn in through both the external and internal inlets 22, 32. This air passes through the passageway 24 and into the heat exchange section 26. In the section 26 the air passes over the heat exchanger 44 and is cooled by the phase change material passing through, which material will tend to melt. The cooled air exits the apparatus 10 through the outlet 28. The air is drawn through the passageway 24 by operation of the fan 30.

The speed of the fan 30, and the degree to which the respective inlets 22, 32 are open can be determined by the control unit 58 in response to the temperatures detected by the sensors 50, 52, 54. A typical daytime operation system is outlined below indicating the degree to which the internal inlet 32 and the speed of the fan 30 are selected in the light of the internal temperature as detected by the sensor 50. As can be seen the warmer the temperature and hence the degree of cooling required, the more air is drawn in from the interior of the building 12 to be cooled by the heat exchanger 44. Also the amount of air being pulled over the heat exchanger 44 increases with temperature to provide a greater amount of cool air.

| Temp | Internal Damper | Fan Speed |
|---|---|---|
| Below 18°C | 0- Closed | 0 - Off |
| 18°C | 20% Open | 0 |
| 19°C | 30% Open | 0 |
| 20°C | 40% Open | 20% |
| 21°C | 50% Open | 30% |
| 22°C | 60% Open | 40% |
| 23°C | 70% Open | 60% |
| 24°C | 80% Open | 80% |
| 25°C | 90% Open | 90% |
| 26°C | 100% Open | 100% Full Speed |

Fig. 2 shows a nightime operation. In this instance the internal inlet 32 is shown as closed, with air being drawn from the outside through the external inlet 22 and over the heat exchanger 44. As nightime air is generally significantly cooler, this will provide for cooling and hence solidification of the phase change material. Whilst air is being cooled during daytime conditions, the phase change material can be melted as heat is taken from the air.

A typical nightime operation could though start with the internal inlet 32 for instance 20% open to purge the room of stale air. The fan 30 could be operated at full speed. This could say run for a period of between 12pm and 6am. If it is detected that the phase change material has cooled to for instance 15°C during this nightime mode, then the fan 30 will switch off. After 6am the apparatus 10 will revert to daytime operation, with operation being determined by the control unit 58 in the light of the temperatures detected by the sensors 50, 52 and perhaps also 54.

The possibility of a manual override will be provided, to for example purge the room, and an override button will be provided (not shown) to fully open the inlets 22 and 32 for a predetermined period, or until the override button is pushed again.

The carbon dioxide level detector 56 is connected to the control unit such that if a carbon dioxide level rises above a predetermined level such as 1500ppm, the external inlet 22 will open to for instance 40% for a set period such as 15 minutes to provide for an injection of fresh air into the building 12.

There is thus described an apparatus for cooling a building, and also a method of cooling a building which provide for significant advantages relative to prior arrangements. This system provides for high levels of efficiency and control, along with providing fresh air when required for instance when a high level of carbon dioxide is detected. Use of the phase change material provides for a significant amount of heat being taken in if necessary by the heat exchanger from the air, in contrast to other heat exchange arrangements. The automatic cooling of the phase change material at night only requires at most a small power input to drive the fan and low power pump

The system allows the use of heat recovery during winter periods by the operation of the phase change material pump and recirculation of the rooms air by the use of the fans during evening periods to capture the heat at the end of the day. As the internal temperature drops all the dampers are closed. During the early morning before occupancy the fans recirculate the previous evenings warmth.

Various modifications may be made without departing from the scope of the invention. For instance, different detectors may be provided, and the automatic introduction of fresh air into the building could be provided when other conditions are sensed. The control unit may be arranged to operate under different conditions, and may be arranged to operate differently at different times of the year. The control unit may be arranged to operate differently dependent on the occupancy of the building. This occupancy could be automatically detected or could be input into the control unit or elsewhere. Different arrangements of inlets and outlets could be provided.

A separate heat fin can be included within the system to allow the LTHW system / radiator circuit to be connected to the cool-phase system. During winter periods the system can be used as a method of warming internal room air or tempering incoming air.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. Building cooling apparatus (10), the apparatus including an inlet (22) for air from outside of the building (12), an inlet (32) for air from inside the building, selectively operable closure means (34, 36) for each of the inlets, an outlet (28) for directing air into the building from the apparatus, a pathway (24) leading from the inlets to the outlet, and a heat exchange arrangement (38) extending into the pathway, which arrangement includes a phase change material which can cause cooling of air passing through the pathway by virtue of melting of the phase change material, and warming of air passing through the pathway by virtue of solidification of the phase change material.

2. Building cooling apparatus according to claim 1, **characterised in that** the inlet closure (34, 36) means is adjustable so as to permit selective partial closing of each of the inlets (22, 32).

3. Building cooling apparatus according to claims 1 or 2, **characterised in that** a fan (30) is provided for urging air along the pathway (24).

4. Building cooling apparatus according to any of the preceding claims, **characterised in that** the heat exchange arrangement includes a reservoir (40) for phase change material and one or more conduit (46) leading in a loop from the reservoir and extending through the pathway (24).

5. Building cooling apparatus according to claim 4, **characterised in that** a selectively operable pump is provided for pumping the phase change material through the or each conduit.

6. Building cooling apparatus according to any of the preceding claims, **characterised in that** the phase change material is in the form of a slurry, with a phase change component which is provided in discrete capsules, in a carrier liquid, the phase change component may be a wax and may be freeze dried alcohol, and the carrier liquid may be water.

7. Building cooling apparatus according to any of the preceding claims, **characterised in that** the phase change component has a phase change temperature of between 20 and 28°C, and more particularly between 22 and 26°C.

8. Building cooling apparatus according to any of the preceding claims, **characterised in that** an external temperature sensor (52) is provided, and the sensor is located in the inlet (22) for air from outside of the building, and an internal temperature sensor (50) is provided locatable in the building.

9. Building cooling apparatus according to any of the preceding claims, **characterised in that** a phase change material temperature sensor (54) is provided, and an internal room temperature sensor and/or a carbon dioxide level sensor (56) is provided locatable in the building.

10. Building cooling apparatus according to any of the preceding claims, **characterised in that** a control unit (58) is provided which is operably connected to the inlet closure means (34, 36), and the control unit is operably connected to any of the fan, pump for phase change material, internal and external sensors, the phase change material temperature sensor and/or the carbon dioxide level sensor, and the control unit automatically controls the apparatus in response to detected conditions.

11. Building cooling apparatus according to claim 10, **characterised in that** the control unit includes a timer, and the control unit is arranged to control the apparatus differently at respective times of day, and especially at night time relative to daytime, and is configured to provide different operating conditions dependent on the time of year and/or external weather conditions.

12. Building cooling apparatus according to claims 10 or 11, **characterised in that** the control unit is configured to provide operating conditions dependent on occupancy of the building, which occupancy is automatically detected, or inputted into the control unit.

13. A method of cooling a building, the method including in daytime conditions selectively passing air over a cool phase change material to cool the air, the air being drawn from internally and/or externally of the building, and in night time conditions passing air from externally of the building over the phase change material to cool same.

14. A method of cooling a building according to claim 13, **characterised in that** in daytime conditions the proportion of air drawn from internally and externally of the building depends on the internal temperature, and at greater internal temperatures a greater proportion of air is drawn from inside the building.

15. A method of cooling a building according to claims 13 or 14, **characterised in that** the amount of air passing over the phase change material is dictated by the internal temperature, with a greater amount of air passing over the phase change material at higher temperatures.
